# EUROPEAN PATENT SPECIFICATION

(11) **EP 3 697 623 B1**
(45) Date of publication and mention of the grant of the patent: **06.07.2022**
(21) Application number: 18788854.0
(22) Date of filing: 11.10.2018
(51) Int. Cl.: B42D 25/351, B42D 25/41, B42D 25/435, B42D 25/387, B42D 25/324, B42D 25/328, B42D 25/355

(54) **SECURITY DOCUMENTS AND METHODS OF MANUFACTURE THEREOF**
SICHERHEITSDOKUMENTE UND VERFAHREN ZUR ERSTELLUNG DAVON
DOCUMENTS DE SÉCURITÉ ET LEURS PROCÉDÉS DE FABRICATION

(30) Priority: 19.10.2017 GB 201717187
(43) Date of publication of application: 26.08.2020
(73) Proprietor: De La Rue International Limited, Basingstoke, Hampshire RG22 4BS (GB)
(72) Inventor: WHITEMAN, Robert, Reading Berkshire RG4 7ST (GB)
(74) Representative: Gill Jennings & Every LLP
(86) International application number: PCT/GB2018/052921
(87) International publication number: WO 2019/077316

(56) References cited:
- EP-A1- 2 199 099
- WO-A1-2007/079549
- CH-A2- 701 875
- DE-A1-102015 010 811
- FR-A1- 3 013 258
- FR-A1- 3 013 258

## Description

This invention relates to security documents, such as banknotes, polymer banknotes, passports, driving licences, identification documents, cheques, bank cards, visas, certificates or stamps, and other documents of value which require their authenticity to be checked. Also disclosed are methods of manufacture thereof.

Articles of value, and particularly security documents, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moire interference devices and moire magnification devices, each of which generates a secure visual effect. Other known security devices include holograms, watermarks, embossings, perforations and the use of colour-shifting or luminescent / fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of security devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices. Conventionally, diffractive structures such as these are manufactured by forming a relief structure in a polymer layer (e.g. by embossing or cast-curing) and applying a refection-enhancing layer such as metal or a high refractive index material to the resulting surface relief, to render it visible. Typically, a protective coating is then applied over the top to shield the structure from damage during handling and to prevent soil from accumulating in the depressions of the relief.

Another class of security devices are laser markings, which have conventionally been used to apply text or graphics to documents in an irreversible manner, by blackening (carbonisation) or ablating of the material from which the document is made. An example of this is disclosed in WO2010/040972. Some further examples of laser-marked security features are disclosed in WO2011/124920, in which the laser-modified material is itself optically variable, and in US2007/0020530, where a diffractive relief structure is formed in the surface of a plastic layer by laser ablation. In all of these examples, the material forming the layer which is laser-marked is absorbent to the laser wavelength, typically as a result of incorporating a laser-absorbent additive into the polymer. As such, the modification or even destruction of the material caused by the laser irradiation will be exhibited at least on the surface of the material struck by the laser beam, and typically part or all of the way through the rest of the material also.

FR 3 013 258 A1 discloses the preamble of claims 1 and 10.

A first aspect of the present invention provides a security document having a window region and a non-window region, the window region being of lower opacity than the non-window region, and comprising a transparent polymer layer at least in the window region of the security document, the transparent polymer layer comprising therewithin an internal laser marking having an optical effect, wherein the internal laser marking does not extend to a surface of the transparent polymer layer, and is surrounded in all directions by portions of the same transparent polymer layer which are not laser marked, wherein the internal laser marking comprises a diffractive structure.

A second aspect of the present invention provides a method of manufacturing a security document, comprising: irradiating a transparent polymer layer using a pulsed laser source with a pulse duration of 100 ps or less, to thereby form an internal laser marking within the transparent polymer layer; and, before or after the irradiating, arranging the transparent polymer layer in a window region of a security document, which window region is of lower opacity than a non-window region thereof, wherein the internal laser marking does not extend to a surface of the transparent polymer layer, and is surrounded in all directions by portions of the same transparent polymer layer which are not laser marked, wherein the internal laser marking comprises a diffractive structure.

Preferably the security document according to the first aspect of the invention is manufactured in accordance with the method of the second aspect of the invention but this is not essential.

The first and second aspects of the invention provide an internal laser marking located within a transparent polymer layer in a window region of a security document. By an "internal" laser marking, it is meant that the laser marking is (only) inside the polymer layer, rather than being located at its surface. The laser marking is thus surrounded by, and intrinsically protected by, the remainder of the polymer layer on both sides. This not only has the advantage of preventing the laser marking being damaged or becoming soiled during use, but also simplifies manufacturing since no additional protective layers or the like need be provided to encase the laser-marked material. The present inventors have found that such an internal laser marking can be formed in a transparent plastic layer using high-energy, short-pulse lasers (e.g. femtosecond lasers) as disclosed in EP2539155, for example. The use of such lasers does away with the need for the polymer layer to be absorbent to the laser wavelength and in particular it is no longer necessary for the layer to include any laser-absorbent additive. Rather, the energy delivered by each laser pulse is so high as to induce multi-photon absorption within the polymer material itself. However, since this effect will only be induced where the pulse energy is sufficiently high, the resulting modification of the material will be confined to a highly localised volume at the laser focus position, and will not spread throughout neighbouring portions of the material. As a result, by careful selection of the focal distance and positioning of the polymer layer the laser marking can be arranged to be entirely internal to the layer, not breaking either surface of the layer.

It should be noted that by "transparent polymer layer" we mean a layer of polymer which is substantially optically clear (i.e. can be seen through) in the absence of the laser marking. The layer could still carry a visible colour or tint. Preferred implementations of the security document structure will be given below but it should be noted that while it is preferable for the transparent polymer layer to extend across the full area of the window region (and, optionally, beyond), this is not essential. The transparent polymer layer is preferably monolithic, but still can itself form part of a multilayer structure, i.e. have one or more additional layers (which may also be polymeric) on either or both of its sides. Nonetheless, the internal laser marking does not extend to a surface (i.e. either surface) of the transparent polymer layer, which surface could be an interface with another layer in the case of a multilayer structure. The laser marking is surrounded in all directions by portions of the same transparent polymer layer which are not laser marked. That is, the laser marking is surrounded in every direction (i.e. above, below and laterally) by the same material (unmodified portions thereof), all of which has the same response to laser irradiation. In conventional laser markings, this is not possible since the laser marking would necessarily extend to the surface of the laser-markable material on which the laser beam is incident.

The present inventors have found that the modification of the polymer material by the laser pulses can take a number of different forms, depending on the polymer material in question and the laser parameters such as power level and pulse duration. For instance, the laser irradiation may result in any one or more of: crystallisation (or re-crystallisation) of the polymer; the formation of micro-voids or micro-cracks; changes in the refractive index of the polymer; and the creation of defects in the polymer structure. It has also been found that some such defects and modifications can give rise to optical effects such as fluorescence.

The laser marking itself can also be implemented in a number of different ways. Generally, the internal laser marking is preferably of increased optical density relative to the remainder of the transparent polymer layer. It should be noted this need not take the form of a change in colour or a darkening of the material (although this is possible as discussed below), but it will result in increased obscuration by the laser-marked material relative to the unmarked material, e.g.as a result of optical scattering.

In accordance with the invention, the optical effect of the internal laser marking is an optically variable effect. The internal laser marking comprises a diffractive structure. For example, it has been found that particularly effective diffractive structures can be formed by arranging the internal laser marking to comprise an array of laser-marked dots (circular, square, irregular or any other shape) or lines (e.g. parallel, preferably straight, lines). For instance, lines made up of spaced dots have been demonstrated to produce good diffractive effects. The dots or lines are spaced by non-irradiated (unmarked) portions of the polymer material. Light passing through the spaces between the dots or lines - either transmitted through the security document under backlit conditions, or reflected from a surface behind the transparent layer - undergoes diffraction and hence appears to a viewer in one or more colours which change as the viewing position moves. The spacing between the dots or lines corresponds to the grating spacing and hence controls the angle over which each wavelength will be diffracted.

This control can be put to good effect to make the marking more complex and hence more difficult to replicate. In a preferred example, the internal laser marking comprises at least first and second laterally offset areas, the spacing between the dots along the respective lines and/or the spacing between the lines being different in the first area from that in the second area. In this way the two areas will simultaneously diffract different wavelengths of light to the same viewing angle and hence appear differently coloured. Alternatively or in addition, the orientation of the respective lines of dots may be different in the first area from that in the second area. This can likewise be used to provide the two areas with different appearances. The two or more areas can be configured to together depict a multi-coloured and/or dynamic image, the various areas of which will change in colour and/or brightness differently from one another as the device is moved.

Optionally, the internal laser marking (or part thereof) may exhibit blackening or charring. In some cases, this may result from utilising multiple laser passes to form the marking. This results in a more distinct marking with strong visual impact.

As noted above, in some embodiments the internal laser marking exhibits fluorescence when illuminated with a corresponding excitation wavelength, preferably ultra violet radiation. This has been found to be a direct result of the described laser irradiation process in certain polymers such as BOPP, PMMA and PET. For instance, laser marked features of the sort disclosed herein, formed in BOPP have been found by the present inventors to fluoresce under UV irradiation: tests confirming this have been carried out under UN illumination at wavelengths of 254 nm, 312 nm and 365 nm (separately). No fluorescence is observed from unmodified BOPP under the same UV wavelengths.

The internal laser marking may preferably define one or more indicia, such as alphanumeric text, symbols, logos, portraits, images or the like, e.g. through configuration of the periphery of the marking and particularly its lateral shape and size. The indicia may be defined in a positive or negative form - that is, either by the presence of the laser marking, or by its absence. The internal laser marking can also be configured to mimic the appearance of known security document components, such as security threads, planchettes, fibres and silks.

In many preferred examples, the internal laser marking lies in a single plane within the transparent polymer layer, the plane being substantially parallel to the surfaces of the transparent polymer layer. It should be noted that this does not preclude the marking from having a non-zero depth/thickness, but the average position of each part of the marking relative to a surface of the layer should be the same. In other embodiments, the internal laser marking includes a first portion lying in a first plane and a second portion lying in a second plane, the first and second planes each being substantially parallel to the surfaces of the transparent polymer layer and spaced from one another in the thickness direction of the transparent polymer layer, the first and second portions preferably at least partially overlapping one another. This can be achieved by changing the position of the laser beam focus relative to the thickness of the polymer layer.

Preferably, the security document further comprises a graphic, wherein the internal laser marking and the graphic cooperate to form together a security feature. For example, the graphic could depict a first part of an image and the internal laser marking depicts a second part of an image, the graphic and the internal laser marking together depicting the complete image when viewed in combination. In other cases, the graphic and the marking could each repeat the same item of information, such as a portrait or serial number. The graphic could be provided in various different forms and may comprise for instance one or more inks (such as a monochromatic or multi-coloured print), metallisations or foils. The graphic could be visible (i.e. visible to the naked eye under visible light illumination), fluorescent (e.g. invisible to the naked eye under visible light illumination, but becoming visible under certain non-visible wavelengths such as UV), colour-shifting or iridescent. The graphic could also be of a type which is both visible to the naked eye and visible (but potentially of different appearance) under certain non-visible wavelengths, e.g. as disclosed in WO 04/050376.

Depending on the nature of the laser marking, the optical effect of the laser marking may be observable in one or other of reflected and transmitted light, or in both. To improve the appearance of the marking in reflected light, in some embodiments, the security document further comprises a reflective layer positioned such that in use the internal laser marking is between the reflective layer and the viewer, e.g. a metal layer.

The security document itself can be constructed in a number of ways. For example, the document may itself be formed of a transparent polymer substrate, e.g. as is the case in polymer banknotes, many bank cards and some passports. In such cases the security document preferably comprises a transparent document substrate and at least one opacifying layer arranged in the non-window region on one or both sides of the transparent document substrate, and optionally in the window region on only one side of the transparent document substrate, wherein either:
the transparent document substrate is the transparent polymer layer having the internal laser marking therewithin; or
the transparent polymer layer having the internal laser marking therewithin is disposed on the transparent document substrate.

In such implementations, to manufacture the security document, arranging the transparent polymer layer in a window region of a security document preferably comprises providing a transparent document substrate and applying at least one opacifying layer to one or both sides thereof, leaving a gap in the opacifying layer(s) on one or both sides to thereby form the window region, wherein either:
the transparent document substrate is the transparent polymer layer and the internal laser marking is provided therewithin; or
the transparent polymer layer having the internal laser marking therewithin is affixed onto the transparent document substrate.

It should be noted that the laser irradiation of the polymer layer can be performed before or after the window region is formed. For example, if the marking is located in the document substrate itself, the irradiation could be carried out before or after the opacifying layer(s) are applied - or between the application of respective opacifying layers, if there is more than one. If the marking is located in a separate layer which is affixed to the document substrate, this could be performed before or after that layer is affixed, which too could be before or after the opacifying layers are applied.

In other examples the security document may comprise a non-transparent document substrate, such as paper or cardboard, as is the case in traditional banknotes and cheques for example. In such cases, the non-transparent document substrate preferably has a partial or through-thickness aperture therein forming the window region, the transparent polymer layer having the internal laser marking therewithin forming part of a security article affixed to or within the non-transparent document substrate and revealed on at least one side through the aperture at the window region, the security article preferably being a thread, strip, overlay or patch.

In such implementations, arranging the transparent polymer layer in a window region of a security document preferably comprises providing the non-transparent document substrate, affixing a security article including the transparent polymer layer having the internal laser marking therewithin to or within the non-transparent document substrate, and forming a partial or through-thickness aperture in the non-transparent document substrate, forming the window region, through which at least one side of the security article is revealed, the security article preferably being a thread, strip, overlay or patch.

Again, the laser marking could be formed in the polymer layer before or after the security article is incorporated into or onto the document substrate. Suitable methods for incorporating the security article include embedding the article inside the substrate during paper making leaving apertures in the paper on one or both sides of the article, as is well known for windowed threads for instance. Alternatively the article can be adhered to one side of the document substrate over an aperture provided therein.

As noted above whilst it is preferred that the laser marking is located in a full window (i.e. the window region is transparent), such that the laser marking can be viewed from both sides of the security document, this is not essential and it could also be a half window, i.e. covered by a non-transparent (preferably translucent) layer on one side only, so that the laser marking can only be viewed from one side of the security document. The half-window approach can be advantageously combined with the provision of a reflective layer as described above to improve the visibility of the laser marking.

In preferred implementations, the transparent polymer layer comprises any of: polypropylene, bi-axially orientated polypropylene (BOPP), polymethyl methacrylate (PMMA), polycarbonate (PC), Polyethylene terephthalate (PET) or nylon.

Preferably, the transparent polymer layer has a thickness in the range 20 to 200 microns, more preferably 30 to 100 microns. It should be noted that the transparent polymer layer could form part of a larger consolidated stack, e.g. a laminate which is thicker, e.g. 700 microns or more.

Advantageously, the security document is a banknote, polymer banknote, passport, driving licence, identification document, cheque, bank card, visa, certificate or stamp.

In the preferred method of manufacture, the pulse duration is advantageously 10 ps or less, still preferably 1 ps or less.

It has been found most effective if the energy delivered by each laser pulse is at least 100 nJ, preferably at least 200 nJ, more preferably at least 10 µJ, still preferably at least 40 µJ.

In some implementations, the internal laser marking may be formed by multiple passes of the pulsed laser source directed to the same location(s) of the transparent polymer layer. This has been found to be particularly suitable for achieving blackening or charring of the laser marking, if desired.

Examples of security documents and methods of manufacture thereof will now be described with reference to the accompanying drawings, in which:
Figure 1(a) shows a first embodiment of a security document in plan view, (b) and (c) depicting two alternative cross-sections thereof;
Figures 2, 3 and 4 show three further embodiments of security documents in accordance with the present invention (a) in plan view, and (b) in cross-section;
Figure 5 illustrates a further embodiment of security document in accordance with the present invention, (a) in front view, (b) in back view and (c) in cross-section;
Figure 6 schematically shows exemplary apparatus as may be used in manufacturing methods in accordance with embodiments of the invention;
Figure 7 is a photograph showing an enlarged portion of an exemplary laser marking as may be provided in embodiments of the invention;
Figures 8 and 9 depict two exemplary laser markings as may be provided in embodiments of the invention;
Figures 10, 11 and 12 show three further examples of security documents in accordance with embodiments of the invention, in plan view; and
Figures 13, 14 and 15 show two further examples of laser markings as may be provided in embodiments of the invention, in plan view.

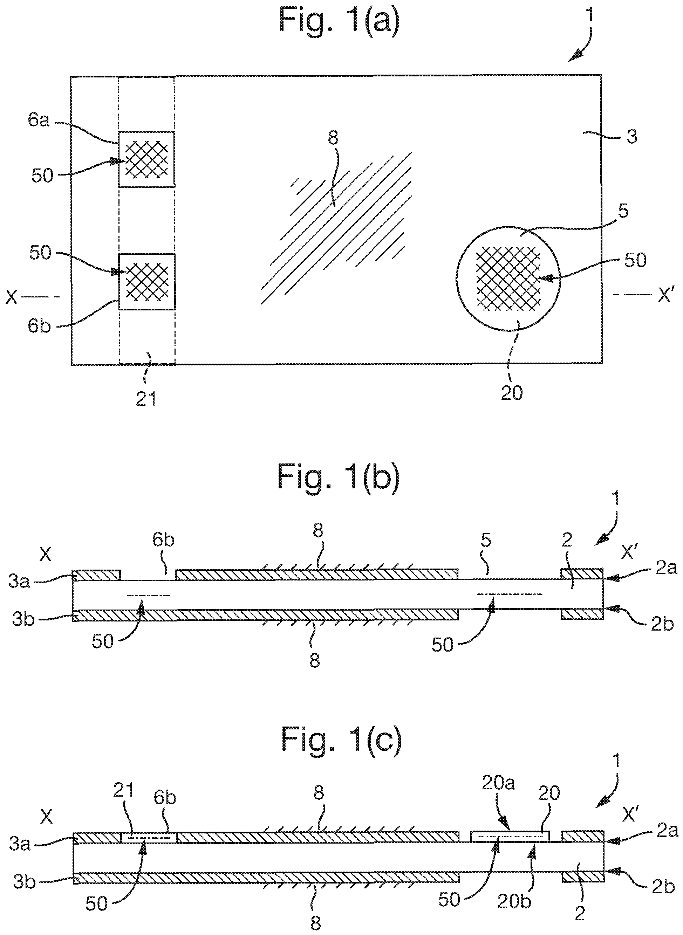

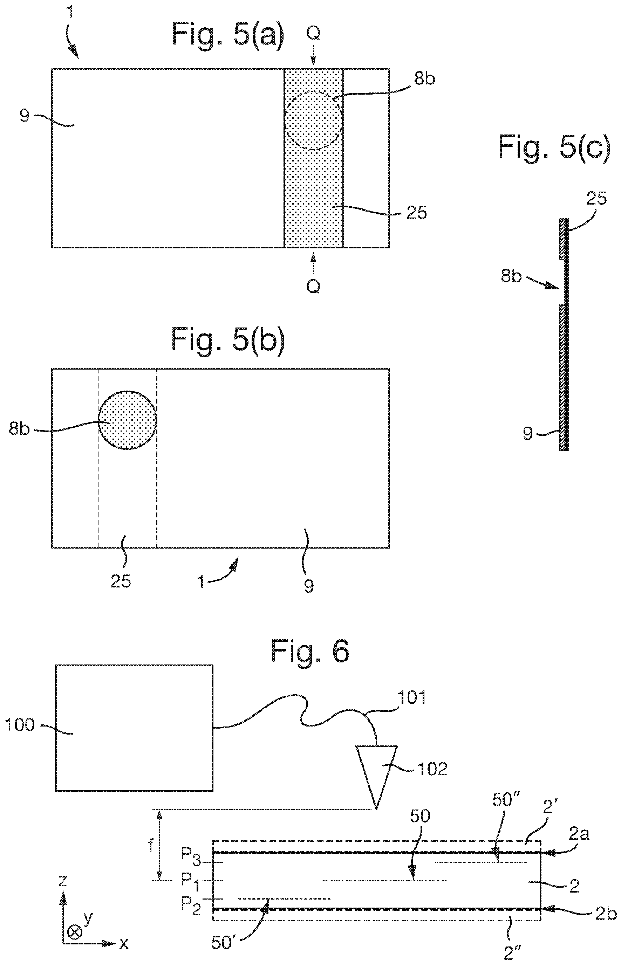

Security documents in accordance with the present invention are provided with a window region, disposed in which is a transparent polymer layer carrying an internal laser marking therewithin. The window region and the transparent polymer layer can be implemented in various different ways, depending on the construction of the security document as a whole. Examples of suitable document structures, and their manufacturing techniques, will first be described with reference to Figures 1 to 5, and then examples of suitable internal laser markings, and techniques for their manufacture, will be described with reference to Figures 6 to 14. It should be appreciated that the later-described laser markings can be incorporated into a security document using any of the exemplary document structures disclosed.

Figure 1 shows an exemplary security document 1, such as a banknote, based on a polymer substrate construction. Figure 1(a) shows the document in plan view and Figures 1(b) and (c) show two alternative cross-sections along the line X-X'. It will be appreciated that the constructions shown are merely exemplary and alternative arrangements are viable.

The security document 1 is based on a polymer substrate 2 which is preferably transparent, i.e. optically clear. The polymer substrate 2 has a first surface 2a and a second surface 2b. It should be noted that wherever components are described herein as being "on" one of the surfaces of the polymer substrate 2, or actions are described as being performed "on" one of said surfaces, this does not require the component or action to be directly on the surface of the polymer substrate. Rather, some intermediate layer, such as a primer layer, could exist immediately on the surface of the polymer substrate itself and the component or action may be applied to or performed on that intermediate layer, unless otherwise specified.

The polymer substrate 2 forms the structural basis of the finished security document 1 and is typically provided initially in the form of a quasi-continuous web, e.g. of width between 0.75 and 1.5 m and typically many tens or hundreds of metres long. The thickness of the polymer substrate is preferably in the range 50 to 100 microns, preferably 60 to 80 microns and most preferably about 70 microns.

The polymer substrate 2 comprises one or more polymeric materials, typically thermoplastics, such as: polypropylene (PP) (most preferably bi-axially oriented PP (BOPP)), polyethylene terephthalate (PET), polyethylene (PE), polycarbonate (PC), polyvinyl chloride (PVC), nylon, acrylic, Cyclic Olefin Polymer (COP) or Cyclic Olefin Copolymer (COC), or any combination thereof. The polymer substrate 2 may be monolithic, e.g. formed from a single one of the above materials, or multi-layered, e.g. having multiple layers of the same type of polymer (optionally with different orientations) or layers of different polymer types.

As mentioned previously, by "transparent" it is meant that the polymer substrate 2 is substantially visually clear, although it may carry a coloured tint and/or another optically detectable substance such as a fluorescent material.

One or both surfaces of the polymer substrate 2 may be treated to improve adhesion / retention of subsequently applied materials. For example, a primer layer may be applied to all or part of either surface of the polymer substrate 2, e.g. by printing or coating. The primer layer is preferably also transparent and again could be tinted or carry another optically detectable material. Suitable primer layers include compositions comprising polyethylene imine, hydroxyl terminated polymers, hydroxyl terminated polyester based co-polymers, cross-linked or uncross-lined hydroxylated acrylates, polyurethanes and UV curing anionic or cationic acrylates.

Alternatively or in addition to the application of a primer layer, the surface of the polymer substrate 2 may be prepared for onward processing by controlling its surface energy. Suitable techniques for this purpose include plasma or corona treatment.

On at least one of the surfaces of the polymer substrate 2, preferably both, one or more opacifying layers 3a, 3b (indicated generally as 3 in Figure 1(a)) are provided. The opacifying layers typically cover a large proportion of the surface area of the security document 1, but are omitted on one or both sides of the polymer substrate 2 in localised areas to form one or more window regions 5, 6, as described further below. The opacifying layer(s) 3 are configured to provide a suitable background for a graphics layer 8, typically applied by printing, which in the case of a banknote generally comprises secure fine line patterns such as guilloches, a portrait, currency and denomination information and the like. Thus the opacifying layers 3 are non-transparent and, in the case of a transparent polymer substrate 2, act to increase the opacity of the document 1 as a whole.

In the window region 5, the opacifying layers 3 are omitted on both sides of the polymer substrate 2, so the window region 5 is a "full window" and, provided the polymer substrate is transparent, will itself be transparent. In the window regions 6a, 6b, on the other hand, the opacifying layer 3a is omitted on one side of the polymer substrate 2 on the other side the opacifying layer 3b remains present. As such, the window regions 6a, 6b are "half windows" which are non-transparent but of lower opacity than the surrounding (non-window) regions of the document 1. It will be appreciated that window regions could additionally or alternatively be provided which contain a mixture of full and half window areas by arranging the gaps in the first and second opacifying layers 3a, 3b to overlap one another only partially (not shown).

Preferably, the opacifying layers 3 comprise polymeric, non-fibrous material containing at least a light scattering substance such as a pigment. The opacifying layers 3 are preferably light in colour, most preferably white or another light colour such as off-white or grey so that a later-applied graphics layer 8 will contrast well against it. In preferred examples, the opacifying layers each have a brightness L* in CIE L*a*b* colour space of at least 70, preferably at least 80 and more preferably at least 90. For example, each opacifying layer may comprise a resin such as a polyurethane based resin, polyester based resin or an epoxy based resin and an opacifying pigment such as titanium dioxide (TiO₂), silica, zinc oxide, tin oxide, clays or calcium carbonate.

Two or more opacifying layers may be applied to each surface of the polymer substrate 2, in order to achieve the necessary opacity. The optical density of each layer by itself may typically be around 0.2 to 0.5. Preferably, three or more layers are applied to each surface, overlapping one another.

In a preferred embodiment, at least one of the opacifying layers (preferably one on each surface of the polymer substrate 2) is made electrically conductive, e.g. by the addition of a conductive pigment thereto. This reduces the effect of static charges which may otherwise build up on the security document 1 during handling.

The opacifying layers are preferably applied to the polymer substrate using a printing process such as gravure printing, although in other case the opacifying layers could be coated onto the substrate, or applied by offset, flexographic, lithographic or any other convenient method. As discussed above, depending on the design of the security document 1, the opacifying layers may be omitted across gaps on one or both surfaces of the polymer substrate to form window regions (which may be full windows or half windows, or a mixture of both). This can be achieved through appropriate patterning of the opacifying layers during the application process.

In alternative constructions, the opacifying layers 3 could comprise self-supporting pre-formed layers (optionally including apertures to later form windows) which are then laminated to the polymer substrate 2. In this case, the opacifying layers could be polymeric or could be of fibrous construction, such as paper, thus rendering the security document a "hybrid" paper/polymer construction.

Within one or more of the window regions 5, 6, a laser marking 50 is provided. Examples of suitable laser markings 50, and methods for their formation, will be given below with reference to Figures 6 onward. The laser markings 50 are each internal to a transparent polymer layer. In the Figure 1(b) construction, the polymer document substrate 2 is the transparent polymer layer and the laser marking 50 is internal to that layer 2. That is, the laser marking 50 is wholly contained within the layer 2, and does not extend to (or break) either of its surfaces 2a, 2b. In this way, the laser marking 50 is protected from damage or soiling during handling by the surrounding material of the substrate 2 itself (all of which has the same response to laser irradiation as that which forms the laser marking 50). The laser marking 50 is surrounded by the substrate material in all directions, i.e. above, below and laterally. The laser marking 50 can be formed in the substrate 2 before or after formation of the window regions 5, 6 (i.e. application of opacifying layers 3) using techniques described below.

In the alternative construction of Figure 1(c), the laser marking 50 is not formed in the document substrate 2 but rather in another transparent polymer layer forming part of a security article 20, 21 such as a thread, strip, overlay or patch. The security article 20, 21 is affixed to a surface of the substrate 2, e.g. via an adhesive layer (not shown). The security article may be wholly contained within the window region (as is the case for security article 20 which has the form of a patch and is located within window 5) or may extend beyond the window region (as is the case for security article 21 which has the form of a thread or strip and extends not only across windows 6a and 6b but also the area between them). In this latter case the security article may be located over or under the opacifying layers 3. The security article preferably extends across the whole of the window region (as is the case for security article 21), but this is not essential (as shown by security article 20, which extends only over a portion of window 5).

Again, the laser marking 50 is internal to the transparent polymer layer of the security article 20, 21 and hence does not extend to either of its surfaces 20a, 20b /21a, 21b. The laser marking 50 can be formed in the security article 20, 21 either before the security article is applied to the substrate 2, or after. Likewise, the opacifying layers 3 can be applied to the substrate 2 before the security article 20, 21 is applied, or after.

Security articles 20, 21 typically comprise a transparent polymer layer formed of PET or the like, which may have a thickness in the range 10 to 70 microns, preferably 20 to 50 microns.

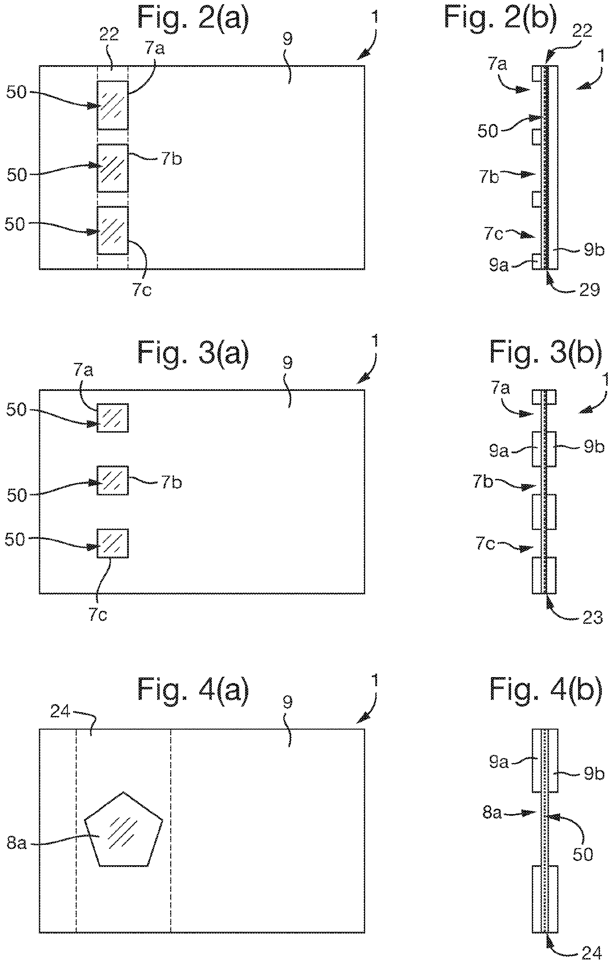

Security articles such as threads, strips, overlays and patches can also be used to incorporate laser markings 50 of the sort herein disclosed into security documents with non-transparent substrates, such as paper. Examples of such constructions will now be described with reference to Figures 2 to 5.

The security article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of devices with an optical effect, such as the laser markings presently disclosed.

The security article may be subsequently incorporated into a paper or polymer base substrate so that it is viewable from both sides of the finished security substrate. Methods of incorporating security elements in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. WO-A-0039391 describes a method of making a transparent region in a paper substrate. Other methods for forming transparent regions in paper substrates are described in EP-A-723501, EP-A-724519, WO-A-03054297 and EP-A-1398174.

The security article may also be applied to one side of a paper substrate so that portions are located in an aperture formed in the paper substrate. An example of a method of producing such an aperture can be found in WO-A-03054297. An alternative method of incorporating a security article which is visible in apertures in one side of a paper substrate and wholly exposed on the other side of the paper substrate can be found in WO-A-2000/39391.

Examples of such security documents and techniques for incorporating a security article will now be described with reference to Figures 2 to 5.

In Figure 2, the security document 1 is a conventional paper-based banknote provided with a security article 22 in the form of a security thread, which is inserted during paper-making such that it is partially embedded into the paper so that portions of the paper 9a, 9b lie on either side of the thread. This can be done using the techniques described in EP0059056 where paper is not formed in the window regions during the paper making process thus exposing the security thread 22 incorporated between layers of the paper. The security thread 22 is exposed in window regions 7a,b,c of the banknote. Alternatively the window regions may for example be formed by abrading the surface of the paper in these regions after insertion of the thread 22. The laser marking 50 is formed on the thread 22, which comprises a transparent polymer layer containing the laser marking 50 therewithin, with an optional reflective layer 29 provided on one side. In this example, the laser marking 50 is configured to be viewed in a reflective mode.

If desired, several different laser markings 50 could be arranged along the thread 22, with different or identical optical effects displayed by each. Alternatively, the laser marking 50 could continue along the whole length of the thread 22 (as shown).

In Figure 3, the construction of the document 1 is much the same as that shown in Figure 2 with the laser marking 50 again being carried on a security thread 23, embedded within a paper substrate 9. However, in this case the thread 23 is exposed though the paper on both sides such that the windows 7a, 7b and 7c are full windows. The reflective layer 29 is omitted from the thread 23 in this example and the laser marking is configured to be viewed in transmitted light. Techniques for producing full thickness apertures in the paper such as this are disclosed in the above referenced documents.

In Figure 4, the security document 1 is again a conventional paper-based banknote, provided with a strip element or insert 24. The strip 24 is based on a transparent polymer substrate and is inserted between two plies of paper 9a and 9b. The laser marking 50 is formed in the polymer substrate of the strip 24. The paper plies 9a and 9b are apertured across region 8a to reveal the laser marking 50, which in this case may be present across the whole of the strip 24 or could be localised within the aperture region 8a.

A further embodiment is shown in Figure 5 where Figures 5(a) and (b) show the front and rear sides of the document 1 respectively, and Figure 5(c) is a cross section along line Q-Q'. Security article 25 is a strip or band comprising a laser marking according to any of the embodiments described below. The security article 25 is formed into a security document 1 comprising a fibrous substrate 9, using a method described in EP-A-1141480. The strip is incorporated into the security document such that it is fully exposed on one side of the document (Figure 5(a)) and exposed in one or more windows 8b on the opposite side of the document (Figure 5(b)). Again, the laser marking formed on the strip 25, which comprises a transparent polymer substrate.

In Figure 5, the document of value 1 is again a conventional paper-based banknote and again includes a strip element 25. In this case there is a single ply of paper. Alternatively a similar construction can be achieved by providing paper 9 with an aperture 8b and adhering the strip element 25 on to one side of the paper 9 across the aperture 9. The aperture may be formed during papermaking or after papermaking for example by die-cutting or laser cutting. Again, the laser marking is formed on the strip 25, which comprises a transparent substrate.

In all of the above embodiments utilising a security article such as a thread, strip or patch, the laser marking 25 can be formed in the transparent polymer layer of the security article before or after incorporation of the article into the security document.

Exemplary laser markings 50 suitable for use in all of the above embodiments will now be described. Figure 6 schematically shows an example of apparatus used for forming the laser marking 50. In this example, the laser marking 50 is to be formed in a transparent polymer layer 2 which may be the document substrate of a security document 1 such as a polymer banknote. However, it could alternatively be a layer of a security article such as a thread, overlay or patch as described above. The transparent polymer layer 2 within which the laser marking 50 is formed is preferably monolithic (i.e. is one continuous piece of material, with no interfaces inside it). However, it may form part of a multilayer structure - that is, the layer 2 may have one or more other layers 2', 2" affixed to either of its surfaces 2a, 2b, e.g. by way of lamination. If they are transparent to the laser wavelength, these layers may be provided before or after the laser marking is formed.

A short-pulse laser source 100 is used to irradiate the transparent polymer layer 2 to thereby form the laser marking 50. The laser light generated by the laser source 100 is directed by a suitable guiding means 101 which could be an optical fibre or a series of optical components such as mirrors to an output point 102 which outputs a focussed beam. The focus of the laser beam sits at a focal distance f from the output point 102 and the transparent polymer layer 2 is positioned relative to the output point 102 such that the focus lies inside the layer 2 in the thickness direction (z-axis). The apparatus is configured such that different lateral portions of the layer 2 can be irradiated by the laser, by moving the layer relative to the output point 102 in the x-y plane. In many embodiments, the whole of the laser marking 50 will lie in a single plane P₁, but it is also positive to move the focal position of the laser beam relative to the layer 2 in the z-axis direction in order to form one or more additional portions of the marking 50', 50" in other planes. The various portions of the laser marking may preferably at least partially overlap one another as shown. The focal position can be adjusted either by moving the layer 2 relative to the output point 102 in the z-axis direction and/or by changing the optical properties (e.g. focussing power) of the guiding means 101 and/or output point 102.

The laser source 100 is preferably an ultra-short pulse laser such as a femtosecond laser. Examples of suitable laser sources 100 and guiding means 101 can be found in EP2539155. Typical laser wavelengths that have been found to be effective include those in the visible spectrum (e.g. 400 to 700 nm) and near infra-red spectrum (e.g. 700 to 1100nm). The polymer layer 2 into which the laser marking is formed is preferably transparent to the selected laser wavelength. The laser pulse duration is preferably 100 ps (picoseconds) or less, more preferably 10 ps or less, most preferably 1ps or less. The pulse energy at the focal position is preferably at least 100 nJ, preferably at least 10 µJ.

Exemplary laser sources suitable for use in the presently disclosed methods include high power fibre lasers, such as any of the following commercially available models (laser wavelength is 1030nm):
- Amplitude Systemes Satsuma HP3: pulse duration 400 fs; power 50 W; pulse repetition rate 1 to 2 MHz; pulse energy 40 µJ.
- IPG photonics YLPF-10-500: pulse duration 500 fs; power 10 W; pulse repetition rate 1 MHz; pulse energy 10 µJ.
- Clark MXR Impulse: pulse duration 250 fs; power 20 W; pulse repetition rate 2 MHz; pulse energy 10 µJ.

Another option would be to use a cavity based Yb laser oscillator/amplifier. Commercially available models include the Spectra-Physics Spirit and the Light Conversion Pharos.

Laser irradiation of the sort produced by any of the above laser sources has been found to induce multi-photon absorption mechanisms in transparent polymers including BOPP, PMMA, PC, PET and the like. Depending on the polymer in question and the laser parameters, the irradiation may lead to any of: the crystallisation (or recrystallization) of the polymer, the formation of micro-voids or micro-cracks, or the creation of defects having an optical effect. As noted above, only a small volume of the polymer material located at the laser focus position will be modified by the irradiation since it is only here that the laser energy is sufficiently high to activate the multi-photon absorption. Typically the result is to render the local volume of the polymer more optically dense than the unmodified volumes of the polymer layer although this need not involve any charring or blackening of the material (although this may be provided in some embodiments). The irradiated volume(s) of the polymer layer become more obscure than their surroundings, which remain optically clear. The irradiated and modified volume(s) of the polymer are surrounded in all directions (above, below and laterally) by unmodified volume(s) of the same polymer.

This can be used in a number of ways. In some comparative examples, the obscuring nature of the laser marking 50 is used by itself to present an optical effect, e.g. an optically scattering or matt area which contrasts with its clear surroundings. For instance, the laser marking 50 could be configured to convey one or more indicia by virtue of its shape and/or size. This could be a macro- or micro- sized indicia - that is, visible to the naked eye or, on the other hand, requiring close inspection or magnification to see it.

It has also been found that the described laser marking technique renders the irradiated volume fluorescent in some polymer materials such as BOPP, PMMA and PET. This characteristic can be revealed by illuminating the laser marking with a suitable excitation wavelength, such as ultra violet illumination. For instance, laser marked features of the sort disclosed herein, formed in bi-axially orientated polypropylene (BOPP), have been found by the present inventors to fluoresce under UV irradiation: tests confirming this have been carried out under UN illumination at wavelengths of 254 nm, 312 nm and 365 nm (separately). No fluorescence is observed from unmodified BOPP under the same UV wavelengths. This phenomenon has recently been observed in PMMA in other technical fields, such as optical data storage, and possible mechanisms behind it are discussed in the paper "Ultra-high density optical data storage in common transparent plastics", by Kallepalli, D. L. N. et al. (Sci. Rep. 6, 26163; doi: 10.1038/srep26163 (2016)). In contrast, forming the same laser marked features in a polycarbonate (PC) stack of thickness of about 600 microns (where the stack is produced by fusing a collection of thinner polycarbonate films together under heat and pressure), has been found not to introduce fluorescence under UV illumination.

As alluded to above, the laser marking 50 can also be made to exhibit blackening or charring (i.e. carbonisation). This can be achieved in particular through multiple passes of the laser beam over the same region, or via a single pass of sufficient intensity.

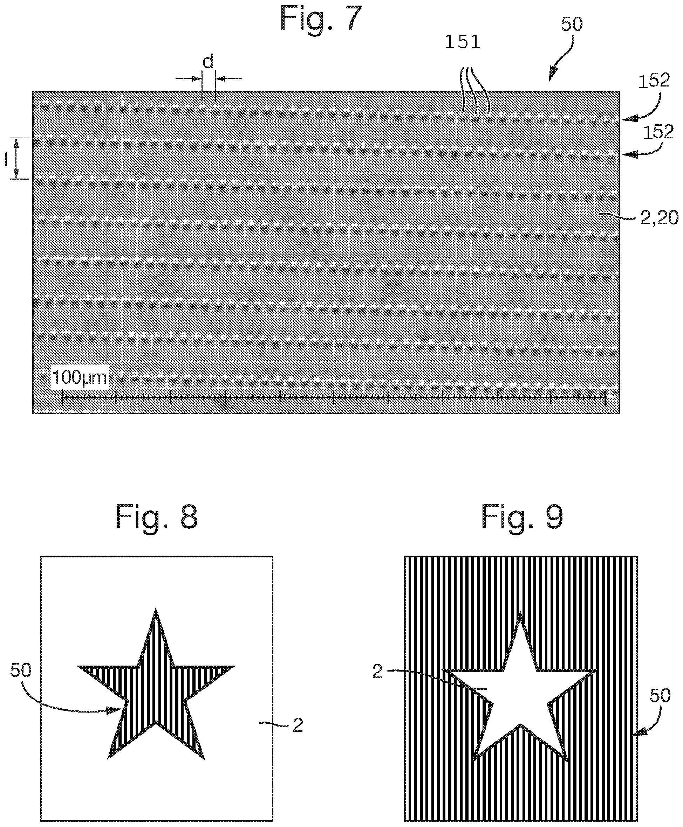

In embodiments of the invention, the laser marking 50 is configured to form a diffractive structure and so present a coloured appearance to the viewer as a result of it diffracting incoming light. For instance, effective diffractive structures have been formed by laser-marking an array of dots into the polymer layer, spaced by non-irradiated portions. A photograph showing an enlarged portion of such an array is provided as Figure 7. The laser-marked dots 151 are arranged in a series of parallel, preferably straight, lines 152. In this example, each dot 151 has a diameter of around 1.2 µm, and is spaced from the next dot 151 by a gap of about 1.2 µm, such that the repeat distance (d) of the dots along each line 152 is about 2.4 µm. The lines 152 themselves are spaced (I) by about 8 µm. It is the spacing between dots 151 along the lines 152 (i.e. 1.2 µm in this case) which determines the angle to which each wavelength of light is diffracted and hence controls what colour will be seen at each viewing angle. If the lines of dots are sufficiently close to one another as to approach the wavelength of light, the line spacing may also have an effect. It should be noted that the individual dots will typically be approximately circular (in plan view) but this is not essential as their shape is not critical.

Other examples of a diffractive structure include arrays of lines - preferably straight, parallel lines - in which case the diffractive properties will be determined by the line spacing.

Again, the lateral extent of the diffractive structure can be configured so as to define one or more indicia such as alphanumeric text, symbols, logos, portraits, graphics etc. The indicia can be positive, i.e. defined by the presence of the diffractive structure, or negative, i.e. defined by its absence. Figure 8 shows an example of a positive indicium in the form of a star shaped area within which the laser marking 50 is present. Figure 9 shows an example of a negative indicium again in the form of a star, but here the laser marking 50 surrounds the star shaped area within which it is absent.

It should be noted that the laser marking 50 could exhibit any combination of these optical effects, as long as it comprises a diffractive structure. For example, the laser marking 50 could comprise a diffractive structure which is also fluorescent, and/or which also exhibits charring.

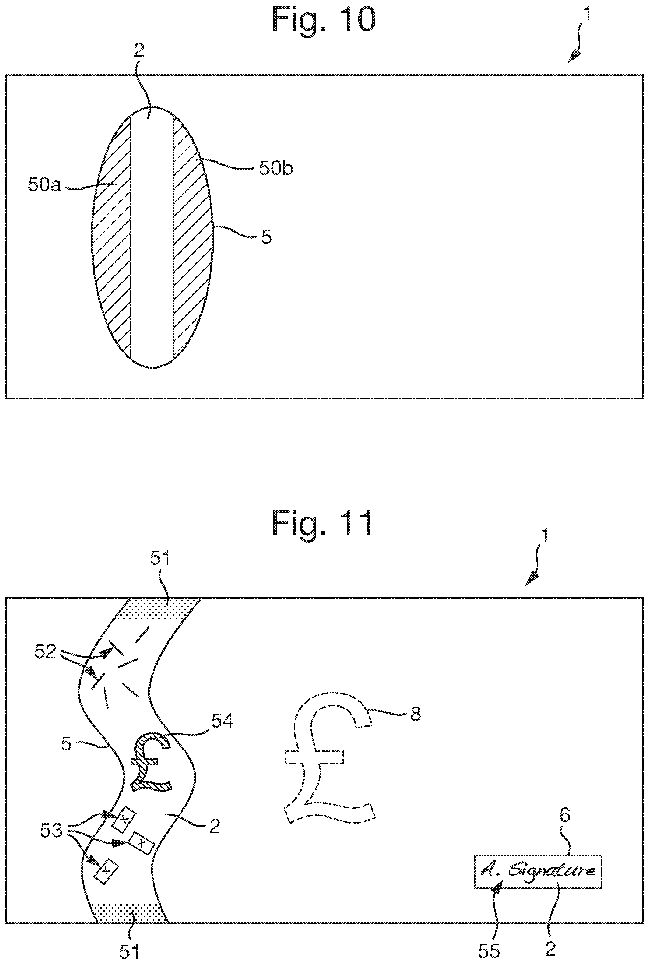

Figure 10 shows another embodiment of a security document 1 having a window region 5 within which a laser marking comprising two areas 50a, 50b is arranged on transparent polymer layer 2 (which may be the document substrate itself or a layer applied thereto, as discussed previously). Devices of this sort are described in detail in WO2008/003949 and can be configured to mimic the appearance of a security thread passing through a window region of a document. The laser-marked areas 50a, 50b are formed as diffractive structures (e.g. as discussed above), leaving an unmarked space between them. When the document 1 is viewed against a backlight, as the viewing angle is varied, the two diffractive regions 50a, 50b direct light to the viewer while the unmarked region does not, thereby appearing dark as if a thread component were present. This can be combined with other elements including reflective holograms and the like, as described in WO2008/003949, if desired.

Further examples of diffractive devices which the laser marking 50 may form are disclosed in EP1049590, EP1196294, EP1781471, EP1977399 Z (or WO 2007/079549) and EP1704538

In these examples the diffractive device is configured so as to transform a light beam transmitted therethrough into a patterned beam which, when projected onto a suitable viewing surface, appears as a patterned image. While conventionally such devices have been formed by patterning an opaque layer (e.g. by laser ablation), the presently disclosed laser marking technique can be used instead, to form the necessary arrangement of (relatively) optically dense areas within the polymer layer itself. These will interact with a transmitted light beam in the same manner, resulting in the desired projected image. The laser marking here is a structured element which will manipulate the impinging wavefront of light beam (by phase shift, reflection, diffraction and/or scattering) such that a predetermined image is visible when a point light source is viewed through the laser marking. Figure 11 illustrates some further examples of laser markings on a security document 1 such as a banknote. For convenience, all of the exemplary laser markings 51, 52, 53, 54 and 55 are illustrated together on the same security document but in practice any one of them could be provided on its own, or alongside any one or more of the other disclosed examples. Moreover, each laser marking 51, 52, 53, 54, 55 could exhibit any one or more of the optical effects disclosed herein, such as increased optical density, optically scattering, a matt effect, a diffractive effect (as claimed), charring/blackening or fluorescence. In this example, the security document 1 has two window regions 5, 6 within which a transparent polymer layer 2 is located. As before, the transparent polymer layer 2 may be the document substrate or could be part of a security article applied thereto.

The window region 5 is a full-width window region extending from one edge of the security document 1 to the opposite edge. Adjacent each edge of the security document 1, a laser marking 51 is provided which extends across a portion of the window region 5. This assists in machine handling of the document, such as by a banknote counter, an ATM or the like, since if a transparent window region extends to an edge of the document this can prevent a machine accurately sensing the position of the edge, e.g. by way of a light gate arrangement. The laser marking 51 acts to increase the optical density of the window region 5 adjacent the document edge and hence reduce the occurrence of such difficulties. It should be noted that whilst the laser marking 51 is depicted as a series of dots this is purely schematic and the laser marking could take any form including as a continuous laser-irradiated area or as a plurality of discontinuous areas (including as a diffractive array as exemplified above).

Also provided in the window region 5 is laser marking 52 which comprises a plurality of narrow, elongate irradiated regions (which may themselves take the form of discrete dots). These are designed to mimic the appearance of security fibres or silks, as are typically provided in conventional paper-based security documents. The laser markings 52 can be arranged at will to give the appearance of a random distribution of the "fibres" in the window. As before, the individual "fibres" could exhibit any of the optical effects mentioned above, but here it is particularly advantageous for the laser marking 52 to exhibit fluorescence since this is typically the case for conventional security fibres in paper documents. Laser marking 53 is based on the same principle as laser marking 52, but here the individual markings are designed to mimic the appearance of planchettes. Conventionally, these are fragments of material dispersed into substrates which may optionally carry microtext or micrographics on them. In the present case, the configuration of the laser markings 52 is configured to have a shape and size corresponding to that of conventional planchettes, and an apparently random distribution within the window. Again, it is preferable for the laser marking 52 to be fluorescent.

Laser marking 54, also provided in window region 5, is designed to mimic a watermark as may typically be found in conventional paper-based security documents and becomes more visible in transmitted light. In this non-claimed example the laser marking 54 may only be of increased optical density/ scattering relative to the rest of the polymer layer 2 surrounding it (and not diffractive or fluorescent, although either of these additional features could be added). The laser marking 54 can if desired be configured in the form of one or more indicia which is or are repeated on the graphics layer 8 of the security document. For instance, in this example the laser marking 54 depicts a pound sign (£) and the pound sign (£) is also displayed on the graphics layer 8. In other cases the laser marking 54 could depict a portrait or other image.

Window region 6 is in this example a separate rectangular window, surrounded on all sides by non-window regions of the security document 1. Contained in the window region 6 is another laser marking 55, the lateral shape and size of which is configured such that the marking depicts an image of a signature, e.g. the signature of an officer of an authority issuing the security document, such as that of a Bank Governor. Again, the laser marking 55 may be solely of increased optical density (not claimed) and/or may be diffractive (as claimed) and/or may be fluorescent.

The laser markings 51, 52, 53, 54, 55 can all be formed using techniques of the sort described above with reference to Figure 6, through control of the relative positions of the transparent layer 2 and the laser apparatus.

The windows 5 and 6 may each be a full window or a half window as previously discussed.

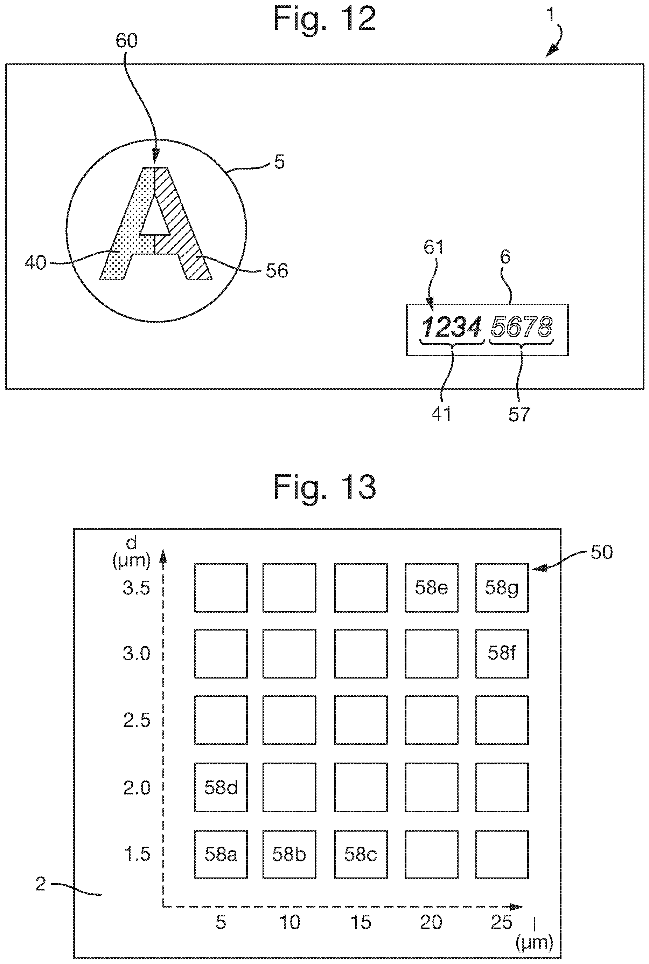

Some further examples of laser markings are shown in Figure 12. Again, here the exemplary laser markings 56, 57 are shown on one and the same security document 1, but this is not essential and either type of feature could be provided alone. In a first window region 5 of the security document 1, a laser marking 56 is provided which interacts with another graphic 40 which is provided on the security document 1 by other means. For example, the graphic 40 could be a print, formed of one or more inks, located on either surface of the document 1 or at an internal interface thereof if the document has a multi-layer structure. Alternatively, the graphic 40 could be an applied foil or a patterned metallisation. The graphic 40 could be visible in visible light, or could be invisible under such conditions and require illumination of a certain wavelength to reveal its presence, e.g. UV. The graphic 40 could be luminescent, phosphorescent or fluorescent. The graphic 40 could alternatively or in addition exhibit visual effects such as iridescence, colour-shifting effects, pearlescence etc. Likewise the laser marking 56 could have any one or more of the optical effects already discussed above, but according to the invention at least exhibiting a diffraction pattern. The graphic 40 and the laser marking 56 together form a single security device 60, and interact with one another in such a way as to link the two components two one another. For instance, in the present example, the graphic 40 forms a first portion of an image (here, the left half of the letter "A"), and the laser marking 56 forms a second portion of the image (here, the right half of the letter "A") such that when viewed in combination the complete image is formed. Of course, this may require certain observation conditions (such as illumination with UV light) to reveal the full image, depending on the nature of graphic 40. The need for exact register between the graphic 40 and laser marking 56 in order to correctly complete the image represents a significant challenge for would-be counterfeiters. In other cases the two components 40 and 57 may interact in other ways - for instance, both may display a copy of the same image. Alternatively or in addition, the components 40 and 47 could colour match at certain viewing angles (and mismatch at others). They could also overlap one another and generate effects through colour addition or subtraction.

In a second window 6, another security device 62 is provided which again is a combination of a graphic 41 and a laser marking 57. The graphic 41 can be provided in any of the ways already mentioned for graphic 40, and the laser marking 57 can again display any or all of the optical effects already mentioned. In this example the security device 62 as a whole displays an item of information such as a serial number uniquely identifying the security document 1. Part of the information (here the digits "1234") is conveyed by the graphic 41 and another part (here the digits "5678") by the laser marking 57. Since the configuration of the laser marking 57 can be changed "on the fly" through control of the laser-marking process, it is possible to use the laser marking to insert (all or part of) individualisation information such as this. Another implementation would be to form the whole serial number (or other item of information) in the laser marking. For instance, the whole serial number could be provided both in printed form and as a laser marking on the document.

Figures 13, 14 and 15 illustrate some further examples of laser markings 50 which are configured to form diffractive devices (or part thereof). As previously noted with reference to Figure 7, diffractive structures can be formed by laser marking arrays of dots into the polymer layer. Typically the dots are arranged in a series of parallel, preferably straight lines. By controlling the dot pitch (d) and/or the line spacing (I), the angle to which the diffractive structure redirects each wavelength of light can also be controlled. In the examples of Figures 13, 14 and 15 each laser marking 50 comprises at least two laterally offset areas in which the dot pitch and/or line spacing is different so that when viewed simultaneously from the same viewing angle the appearance of the at least two areas differs from one another, e.g. in terms of colour and/or brightness.

Figure 13 shows an example of a laser marking 50 comprising a plurality of laterally offset areas of which some are labelled 58a, 58b, 58c, etc..... In this example, each area 58a, 58b... is a square or rectangular area and the set of areas is arranged on an orthogonal grid. The areas here are spaced from one another by unmarked regions of the polymer layer 2, but this is not essential and the areas could abut one another. Each area 58a, 58b contains a diffractive structure formed of laser irradiated dots arranged in lines, such as that described with reference to Figure 6 above. However, the dot pitch (d) and/or line spacing (I) is different in each of the areas 58a, 58b etc. For instance, in area 58a, the dot spacing is 1.5 µm and the line spacing is 5 µm, while in area 58d, the dot spacing is 2 µm and the line spacing is 5 µm, and in area 58g, the dot spacing is 3 µm and the line spacing is 25 µm. When the device 50 is viewed from any one viewing angle, the areas 58a, 58b etc will each simultaneously have a different appearance in terms of colour and/or brightness as a result of the different angles to which each area is diffracting light. An impression of movement is created as the sample is moved (i.e. tilted and/or rotated) so different gratings are emphasised. In particular, colour moves across the different gratings as the sample is tilted. If desired, the areas 58 can be configured and arranged to act together as pixels of an image, the parameters of the diffractive structure in each area being selected so as to give rise to the desired colour for that pixel.

Depending on the polymer material 2, the laser marking 50 may also exhibit fluorescence as mentioned above. The intensity of the emitted fluorescence will also vary from area to area as a result of the differing proportion of laser-marked material to non-laser-marked material in each area. For instance, in this example, area 58a will emit the greatest level of fluorescence because this area will have the greatest number of laser-marked dots (and hence volume of modified plastics material) relative to the other areas 58.

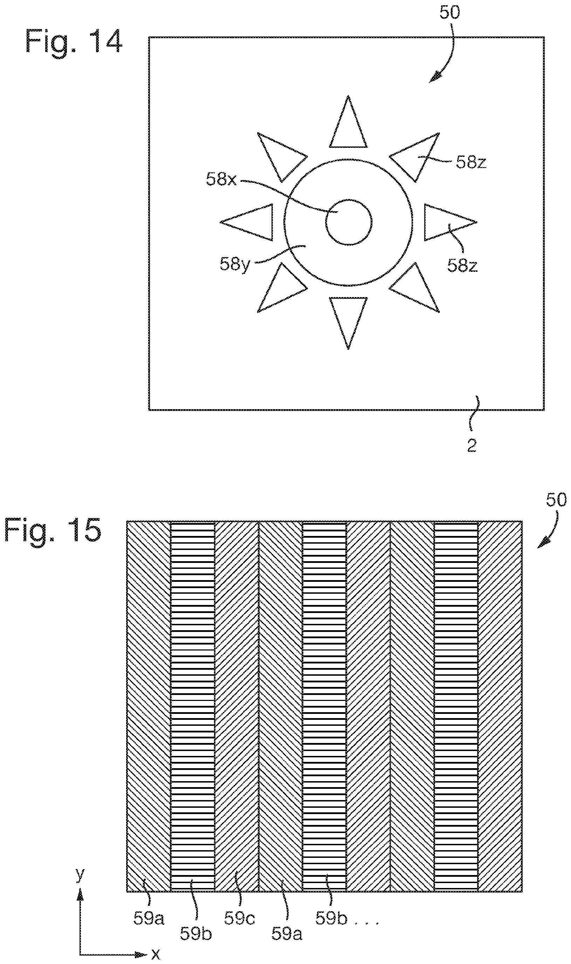

Figure 14 shows another example of a laser marking 50 employing the same principles as in the Figure 13 embodiment. In this example the laser marking 50 is made up of a plurality of laterally offset areas 58x, 58y, 58z..., which are configured to together represent an indicia which in this case is a sun-shaped symbol. Areas 58x and 58y are concentric circular areas abutting one another which together form the central area of the sun symbol, and areas 58z are triangular areas arranged along radii to illustrate the sun's rays. Areas 58z are each spaced from each other and from the area 58y by unmarked areas of polymer layer 2. Each area 58x, 58y, 58z contains a laser marked diffractive structure such as those described above. The dot spacing (d) and/or the line spacing (I) is varied between the different areas with the result that as the device is tilted and/or rotated different ones of the areas direct light to the viewer, and the colours vary. For instance the various diffraction gratings could be configured so that the different areas 58x, 58y, 58z appear to "switch on" in sequence from the centre of the indicia outward and then back in towards the centre as the device is tilted, to give an expansion/contraction effect. Many other forms of animation are also possible.

For instance, the laser marking 50 could be configured to display different images at different viewing angles, by interleaving elements of two or more images and arranging the parameters of the diffraction structures to differ between images. Thus, the elements of one image will appear bright at one viewing angle, while the elements of the other image(s) will appear dark, and as the viewing angle is changed different ones of the images will be illuminated. This can be configured to give rise to switching or animation effects depending on the choice of images. Examples of devices operating on this principle (but formed using conventional processes) are disclosed in WO99/59036 and WO2006/061586.

In Figure 15, the laser marking 50 comprises an array of strip-shaped regions 59a, 59b, 59c which are periodic in the x-direction. In each strip 59a, repeated at regular intervals, the diffraction grating parameters are the same such that each strip 59a will appear the same colour at any one viewing angle. Likewise, all the strips 59b contain a diffraction grating of the same parameters (but different to that of strips 59a), as do all the strips 59c. Hence at one viewing angle, the strips 59a may all appear red, the strips 59b green and the strips 59c blue, for example. The resulting laser marking 50 can therefore be used as a RGB grid, for instance. This can be used as a security device on its own but also finds utility as a component of security devices such as those disclosed in International patent application no PCT/GB2017/052362**,** published as WO 2018/037208, and British patent application no. 1710688.1, in each of which the laser marking 50 herein disclosed can be used to form the required colour strips. In each of these devices another component, such as a masking layer or a light redirection layer is used to select which colour(s) of the grid are displayed to the viewed at any one location.

It should be noted that whilst the laser markings described above are primarily described as being visible to a (human) observer, they can also be detected by machine. For instance, where the laser marking comprises a diffractive structure, and this is according to the claimed invention, the angle to which it will diffract a certain wavelength of light is predictable and hence the feature can be checked by using a reader to detect the diffracted light and confirm that it is located at the expected position and is of the expected wavelength. If the laser marking comprises multiple areas with different diffractive structures, one or more than one of these areas can be checked in this way to confirm the authenticity of the feature.

## Claims

1. A security document having a window region 2. (5, 6, 6a, 6b, 7a, 7b, 7c) and a non-window region, the window region being of lower opacity than the non-window region, and comprising a transparent polymer layer (2, 20, 21, 22, 23, 24, 25) at least in the window region of the security document the transparent polymer layer comprising therewithin an internal laser marking (50, 50a, 50b, 51, 52, 53, 54, 55, 56, 57, 58a-g, 58x-z, 59a,b) having an optical effect, 2. **characterised in that** the internal laser marking does not extend to a surface (2a, 2b, 20a, 20b, 21a, 21b) of the transparent polymer layer, and is surrounded in all directions by portions of the same transparent polymer layer which are not laser marked, and **in that** the internal laser marking comprises a diffractive structure.

2. A security document according to claim 1, wherein the transparent polymer layer is monolithic.

3. A security document according to any of the preceding claims, wherein the optical effect of the internal laser marking is an optically variable effect.

4. A security document according to any of the preceding claims, wherein the internal laser marking comprises an array of laser-marked dots (151) or lines (152), preferably arranged in parallel, most preferably straight, lines.

5. A security document according to any of the preceding claims, wherein the internal laser marking exhibits fluorescence when illuminated with a corresponding excitation wavelength, preferably ultra violet radiation.

6. A security document according to any of the preceding claims, further comprising a graphic (8), wherein the internal laser marking and the graphic cooperate to form together a security feature, wherein preferably the graphic depicts a first part of an image and the internal laser marking depicts a second part of an image, the graphic and the internal laser marking together depicting the complete image when viewed in combination.

7. A security document according to any of the preceding claims, comprising a transparent document substrate (2, 20, 21, 22, 23, 24, 25) and at least one opacifying layer (3a, 3b) arranged in the non-window region on one or both sides of the transparent document substrate, and optionally in the window region on only one side of the transparent document substrate, wherein either:
the transparent document substrate is the transparent polymer layer having the internal laser marking therewithin; or
the transparent polymer layer having the internal laser marking therewithin is disposed on the transparent document substrate.

8. A security document according to any of claims 1 to 6, comprising a non-transparent document substrate I (9, 9a, 9b) having a partial or through-thickness aperture (8a, 8b) therein forming the window region, the transparent polymer layer having the internal laser marking therewithin forming part of a security article affixed to or within the non-transparent document substrate and revealed on at least one side through the aperture at the window region, the security article preferably being a thread, strip, overlay or patch.

9. A security document according to any of the preceding claims, wherein the transparent polymer layer has a thickness in the range 20 to 200 microns, preferably 30 to 100 microns.

10. A method of manufacturing a security document, comprising: irradiating a transparent polymer layer (2, 20, 21, 22, 23, 24, 25) using a pulsed laser source 2. (100) with a pulse duration of 100 ps or less, to thereby form an internal laser marking (50, 50a, 50b, 51, 52, 53, 54, 55, 56, 57, 58a-g, 58x-z, 59a,b) within the transparent polymer layer; and, before or after the irradiating, arranging the transparent polymer layer in a window region (5, 6, 6a, 6b, 7a, 7b, 7c) of a security document, which window region is of lower opacity than a non-window region thereof, **characterised in that** the internal laser marking does not extend to a surface (2a, 2b, 20a, 20b, 21a, 21b) of the transparent polymer layer and is surrounded in all directions by portions of the same transparent polymer layer which are not laser marked, and **in that** the internal laser marking comprises a diffractive structure.

11. A method according to claim 10, wherein the pulse duration is 10 ps or less, more preferably 1 ps or less, and/or the energy delivered by each laser pulse is at least 100 nJ, preferably at least 200 nJ, more preferably at least 10 µJ, still preferably at least 40 µJ.

12. A method according to any of claims 10 to 11, wherein the optical effect of the internal laser marking is an optically variable effect.

13. A method according to any of claims 10 to 12, wherein the internal laser marking is formed by using the pulsed laser source to laser-mark an array of dots (151) arranged in parallel, preferably straight, lines (152).

14. A method according to any of claims 10 to 13, wherein the internal laser marking exhibits fluorescence when illuminated with a corresponding excitation wavelength, preferably ultra violet radiation.

## Patentansprüche

1. Sicherheitsdokument mit einem Fensterbereich (5, 6, 6a, 6b, 7a, 7b, 7c) und einem Nicht-Fensterbereich, wobei der Fensterbereich eine geringere Opazität aufweist als der Nicht-Fensterbereich, und umfassend eine transparente Polymerschicht (2, 20, 21, 22, 23, 24, 25) zumindest in dem Fensterbereich des Sicherheitsdokuments, wobei die transparente Polymerschicht eine interne Lasermarkierung (50, 50a, 50b, 51, 52, 53, 54, 55, 56, 57, 58a-g, 58x-z, 59a,b) darin umfasst, die einen optischen Effekt aufweist, **dadurch gekennzeichnet, dass** sich die interne Lasermarkierung nicht zu einer Oberfläche (2a, 2b, 20a, 20b, 21a, 21b) der transparenten Polymerschicht erstreckt und in allen Richtungen von Abschnitten derselben transparenten Polymerschicht, die nicht lasermarkiert sind, umgeben ist, und dadurch, dass die interne Lasermarkierung eine diffraktive Struktur umfasst.

2. Sicherheitsdokument nach Anspruch 1, wobei die transparente Polymerschicht monolithisch ist.

3. Sicherheitsdokument nach einem der vorangehenden Ansprüche, wobei es sich bei dem optischen Effekt der internen Lasermarkierung um einen optisch veränderlichen Effekt handelt.

4. Sicherheitsdokument nach einem der vorangehenden Ansprüche, wobei die interne Lasermarkierung eine Anordnung von lasermarkierten Punkten (151) oder Linien (152) umfasst, die vorzugsweise in parallelen, am besten geraden Linien angeordnet sind.

5. Sicherheitsdokument nach einem der vorangehenden Ansprüche, wobei die interne Lasermarkierung Fluoreszenz zeigt, wenn sie mit einer entsprechenden Anregungswellenlänge, vorzugsweise Ultraviolettstrahlung, angestrahlt wird.

6. Sicherheitsdokument nach einem der vorangehenden Ansprüche, ferner umfassend eine Grafik (8), wobei die interne Lasermarkierung und die Grafik zusammenwirken, um zusammen ein Sicherheitsmerkmal zu bilden, wobei vorzugsweise die Grafik einen ersten Teil eines Bilds darstellt und die interne Lasermarkierung einen zweiten Teil eines Bilds darstellt, wobei die Grafik und die interne Lasermarkierung zusammen das komplette Bild darstellen, wenn sie in Kombination betrachtet werden.

7. Sicherheitsdokument nach einem der vorangehenden Ansprüche, umfassend ein transparentes Dokumentsubstrat (2, 20, 21, 22, 23, 24, 25) und mindestens eine Trübungsschicht (3a, 3b), die in dem Nicht-Fensterbereich auf einer oder beiden Seiten des transparenten Dokumentsubstrats und optional in dem Fensterbereich auf nur einer Seite des transparenten Dokumentsubstrats angeordnet ist, wobei entweder:
es sich bei dem transparenten Dokumentsubstrat um die die interne Lasermarkierung darin aufweisende transparente Polymerschicht handelt; oder
die die interne Lasermarkierung darin aufweisenden transparente Polymerschicht auf dem transparenten Dokumentsubstrat positioniert ist.

8. Sicherheitsdokument nach einem der Ansprüche 1 bis 6, umfassend ein nichttransparentes Dokumentsubstrat (9, 9a, 9b), das ein partielle oder durch die Dicke gehende Öffnung darin aufweist, die den Fensterbereich bildet, wobei die die interne Lasermarkierung darin aufweisende transparente Polymerschicht einen Teil eines Sicherheitsartikels bildet, der an dem oder in dem nicht-transparenten Dokumentsubstrat befestigt ist und auf mindestens einer Seite durch die Öffnung an dem Fensterbereich aufgedeckt ist, wobei es sich bei dem Sicherheitsartikel vorzugsweise um einen Faden, einen Streifen, eine Deckschicht oder einen Patch handelt.

9. Sicherheitsdokument nach einem der vorangehenden Ansprüche, wobei die transparente Polymerschicht eine Dicke im Bereich von 20 bis 200 Mikrometern, vorzugsweise 30 bis 100 Mikrometern aufweist.

10. Verfahren zum Herstellen eines Sicherheitsdokuments, das Folgendes umfasst: Bestrahlen einer transparenten Polymerschicht (2, 20, 21, 22, 23, 24, 25) unter Verwendung einer Impulslaserquelle (100) mit einer Impulsdauer von 100 ps oder weniger, um dadurch eine interne Lasermarkierung (50, 50a, 50b, 51, 52, 53, 54, 55, 56, 57, 58a-g, 58x-z, 59a,b) in der transparenten Polymerschicht zu bilden; und, vor oder nach dem Bestrahlen, Anordnen der transparenten Polymerschicht in einem Fensterbereich (5, 6, 6a, 6b, 7a, 7b, 7c) eines Sicherheitsdokuments, wobei der Fensterbereich einer geringere Opazität aufweist als ein Nicht-Fensterbereich desselben, **dadurch gekennzeichnet, dass** sich die interne Lasermarkierung nicht zu einer Oberfläche (2a, 2b, 20a, 20b, 21a, 21b) der transparenten Polymerschicht erstreckt und in allen Richtungen von Abschnitten derselben transparenten Polymerschicht, die nicht lasermarkiert sind, erstreckt, und dadurch, dass die interne Lasermarkierung eine diffraktive Struktur umfasst.

11. Verfahren nach Anspruch 10, wobei die Impulsdauer 10 ps oder weniger beträgt, weiter bevorzugt 1 ps oder weniger, und/oder die von jedem Laserimpuls zugeführte Energie mindestens 100 nJ, vorzugsweise mindestens 200 nJ, weiter bevorzugt mindestens 10 µJ, noch weiter bevorzugt mindestens 40 µJ beträgt.

12. Verfahren nach einem der Ansprüche 10 bis 11, wobei es sich bei dem optischen Effekt der internen Lasermarkierung um einen optisch veränderlichen Effekt handelt.

13. Verfahren nach einem der Ansprüche 10 bis 12, wobei die interne Lasermarkierung gebildet wird, indem die Impulslaserquelle verwendet wird, um eine Anordnung von Punkten (151) durch Laser zu markieren, die in parallelen, vorzugsweise geraden Linien (152) angeordnet sind.

14. Verfahren nach einem der Ansprüche 10 bis 13, wobei die interne Lasermarkierung Fluoreszenz zeigt, wenn sie mit einer entsprechenden Anregungswellenlänge, vorzugsweise Ultraviolettstrahlung, angestrahlt wird.

## Revendications

1. Document de sécurité ayant une région à fenêtre (5, 6, 6a, 6b, 7a, 7b, 7c) et une région sans fenêtre, la région à fenêtre étant d'une opacité inférieure par rapport à la région sans fenêtre, et comportant une couche de polymère transparente (2, 20, 21, 22, 23, 24, 25) au moins dans la région à fenêtre du document de sécurité, la couche de polymère transparente comportant dans celle-ci un marquage au laser interne (50, 50a, 50b, 51, 52, 53, 54, 55, 56, 57, 58a-g, 58x-z, 59a,b) ayant un effet optique, **caractérisé en ce que** le marquage au laser interne ne s'étend pas sur une surface (2a, 2b, 20a, 20b, 21a, 21b) de la couche de polymère transparente et est entouré dans toutes les directions par des parties de la même couche de polymère transparente qui n'ont pas été marquées au laser, et **en ce que** le marquage au laser interne comporte une structure diffractive.

2. Document de sécurité selon la revendication 1, dans lequel la couche de polymère transparente est monolithique.

3. Document de sécurité selon l'une quelconque des revendications précédentes, dans lequel l'effet optique du marquage au laser interne est un effet optiquement variable.

4. Document de sécurité selon l'une quelconque des revendications précédentes, dans lequel le marquage au laser interne comporte un réseau de points (151) ou de lignes (152) marqués au laser, de préférence agencés en lignes parallèles, encore plus de préférence, droites.

5. Document de sécurité selon l'une quelconque des revendications précédentes, dans lequel le marquage au laser interne présente une fluorescence quand il est illuminé par une longueur d'onde d'excitation correspondante, de préférence par un rayonnement ultraviolet.

6. Document de sécurité selon l'une quelconque des revendications précédentes, comportant par ailleurs un graphique (8), dans lequel le marquage au laser interne et le graphique coopèrent pour former ensemble une caractéristique de sécurité, dans lequel de préférence le graphique dépeint une première partie d'une image et le marquage au laser interne dépeint une deuxième partie d'une image, le graphique et le marquage au laser interne dépeignant ensemble l'image complète lorsqu'ils sont vus de manière combinée.

7. Document de sécurité selon l'une quelconque des revendications précédentes, comportant un substrat de document transparent (2, 20, 21, 22, 23, 24, 25) et au moins une couche opacifiante (3a, 3b) agencée dans la région sans fenêtre sur un côté ou sur les deux côtés du substrat de document transparent, et éventuellement dans la région à fenêtre sur seulement un côté du substrat de document transparent, dans lequel soit :
le substrat de document transparent est la couche de polymère transparente ayant le marquage au laser interne dans celle-ci ; soit
la couche de polymère transparente ayant le marquage au laser interne dans celle-ci est disposée sur le substrat de document transparent.

8. Document de sécurité selon l'une quelconque des revendications 1 à 6, comportant un substrat de document non transparent (9, 9a, 9b) ayant une ouverture d'épaisseur traversante ou partielle (8a, 8b) dans celui-ci formant la région à fenêtre, la couche de polymère transparente ayant le marquage au laser interne dans celle-ci faisant partie d'un article de sécurité fixé sur le, ou à l'intérieur du, substrat de document non transparent et révélé sur au moins un côté au travers de l'ouverture au niveau de la région à fenêtre, l'article de sécurité étant de préférence un filet, une bande, un calque ou un timbre.

9. Document de sécurité selon l'une quelconque des revendications précédentes, dans lequel la couche de polymère transparente a une épaisseur se trouvant dans la plage allant de 20 à 200 microns, de préférence de 30 à 100 microns.

10. Procédé de fabrication d'un document de sécurité, comportant les étapes consistant à : irradier une couche de polymère transparente (2, 20, 21, 22, 23, 24, 25) en utilisant une source de laser à impulsions (100) présentant une durée d'impulsion de 100 ps ou moins, pour de ce fait former un marquage au laser interne (50, 50a, 50b, 51, 52, 53, 54, 55, 56, 57, 58a-g, 58x-z, 59a,b) à l'intérieur de la couche de polymère transparente ; et, avant ou après l'irradiation, agencer la couche de polymère transparente dans une région à fenêtre (5, 6, 6a, 6b, 7a, 7b, 7c) d'un document de sécurité, région à fenêtre qui est d'une opacité inférieure par rapport à une région sans fenêtre de celle-ci, **caractérisé en ce que** le marquage au laser interne ne s'étend pas sur une surface (2a, 2b, 20a, 20b, 21a, 21b) de la couche de polymère transparente et est entouré dans toutes les directions par des parties de la même couche de polymère transparente qui n'ont pas été marquées au laser, et **en ce que** le marquage au laser interne comporte une structure diffractive.

11. Procédé selon la revendication 10, dans lequel la durée d'impulsion est de 10 ps ou moins, plus de préférence de 1 ps ou moins, et/ou l'énergie délivrée par chaque impulsion laser est au moins de 100 nJ, de préférence au moins de 200 nJ, plus de préférence au moins du 10 µJ, encore plus de préférence au moins de 40 µJ.

12. Procédé selon l'une quelconque des revendications 10 à 11, dans lequel l'effet optique du marquage au laser interne est un effet optiquement variable.

13. Procédé selon l'une quelconque des revendications 10 à 12, dans lequel le marquage au laser interne est formé en utilisant la source de laser à impulsions pour marquer au laser un réseau de points (151) agencés en lignes parallèles, de préférence, droites (152).

14. Procédé selon l'une quelconque des revendications 10 à 13, dans lequel le marquage au laser interne présente une fluorescence quand il est illuminé par une longueur d'onde d'excitation correspondante, de préférence par un rayonnement ultraviolet.
